(19) Europäisches Patentamt / European Patent Office / Office européen des brevets

(11) **EP 4 207 384 A1**

(12) **EUROPEAN PATENT APPLICATION**
published in accordance with Art. 153(4) EPC

(43) Date of publication:
**05.07.2023 Bulletin 2023/27**

(21) Application number: **21957734.3**

(22) Date of filing: **27.10.2021**

(51) International Patent Classification (IPC):
**H01M 4/505** (2010.01)     **H01M 4/13** (2010.01)
**H01M 10/0525** (2010.01)

(52) Cooperative Patent Classification (CPC):
Y02E 60/10

(86) International application number:
**PCT/CN2021/126833**

(87) International publication number:
**WO 2023/070401 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Ltd.
Ningde City, Fujian Province 352100 (CN)**

(72) Inventor: **ZHANG, Yangyang
Ningde, Fujian 352100 (CN)**

(74) Representative: **Klunker IP
Patentanwälte PartG mbB
Destouchesstraße 68
80796 München (DE)**

(54) **ELECTROCHEMICAL DEVICE AND ELECTRONIC DEVICE COMPRISING ELECTROCHEMICAL DEVICE**

(57)     This application provides an electrochemical apparatus and an electronic apparatus containing the same. The electrochemical apparatus includes a positive electrode plate and a negative electrode plate, where the negative electrode plate includes a negative electrode active material layer, and the negative electrode active material layer includes a negative electrode active material; and the positive electrode plate includes a positive electrode active material layer, the positive electrode active material layer includes a positive electrode active material, and the positive electrode active material includes a lithium manganese oxide; and when the electrochemical apparatus is at a 15% SOC, a lattice parameter $a$ of the lithium manganese oxide is lower than or equal to 8.2008Å. The electrochemical apparatus has good high-temperature storage performance and cycling performance. The electronic apparatus containing the electrochemical apparatus also has good high-temperature storage performance and cycling performance.

EP 4 207 384 A1

## Description

### TECHNICAL FIELD

This application relates to the electrochemical field, and specifically, to an electrochemical apparatus and an electronic apparatus containing the same.

### BACKGROUND

Lithium-ion batteries have advantages such as high energy storage density, high open-circuit voltage, low self-discharge rate, long cycle life, and high safety, and therefore are widely used in various fields such as electric energy storage, mobile electronic devices, electric bicycles, electric vehicles, and aerospace devices.

Performance of the lithium-ion batteries mainly depends on characteristics of positive electrode plates, negative electrode plates, separators, and electrolytes. Generally, positive electrode active material in the positive electrode plates is one of important factors affecting the performance of the lithium-ion batteries. As a commonly used positive electrode active material, lithium manganese oxide is widely used in fields of electric bicycles and electric vehicles. However, using lithium manganese oxide alone has problems of poor high-temperature storage performance and short service life.

### SUMMARY

This application is intended to provide an electrochemical apparatus and an electronic apparatus containing the same to improve high-temperature storage performance and high-temperature cycling performance of the electrochemical apparatus.

A first aspect of this application provides an electrochemical apparatus. The electrochemical apparatus includes a positive electrode plate and a negative electrode plate, where the negative electrode plate includes a negative electrode active material layer, and the negative electrode active material layer includes a negative electrode active material; and the positive electrode plate includes a positive electrode active material layer, the positive electrode active material layer includes a positive electrode active material, and the positive electrode active material includes a lithium manganese oxide; and when the electrochemical apparatus is at a 15% SOC (state of charge), a lattice parameter $a$ of the lithium manganese oxide is lower than or equal to 8.2008Å. For example, the lattice parameter $a$ of the lithium manganese oxide is 8.1170Å, 8.1190Å, 8.1289Å, 8.1619Å, 8.1819Å, 8.1837Å, 8.1881Å, 8.1887Å, 8.1908Å, 8.1900Å, 8.1905Å, 8.1910Å, 8.1918Å, 8.1921Å, or 8.2008Å, or any value between any two of the foregoing values. Without wishing to be bound by any theory, controlling the lattice parameter $a$ of the lithium manganese oxide within the foregoing range when the electrochemical apparatus is at the 15% SOC can maintain a stable crystal structure of the lithium manganese oxide within an entire SOC change range (namely, from 0% SOC to 100% SOC) of electrochemical apparatuses, thereby improving the high-temperature cycling performance of the electrochemical apparatuses. In addition, this can also reduce structural distortion of lithium manganese oxide during charge and discharge cycling of the electrochemical apparatuses and inhibit dissolution of Mn (manganese) ions, enabling more uniform distribution of Mn on negative electrodes and reducing damages to SEI (solid electrolyte interface) films on the negative electrodes, thereby improving high-temperature storage performance of the electrochemical apparatuses. In addition, this can also reduce lithium precipitated on the negative electrodes and improve safety performance of the electrochemical apparatuses.

In some embodiments of this application, the lithium manganese oxide includes $Li_xMn_{2-y}M_yO_4$, where $0.9 \leq x \leq 1.1$, $0 \leq y \leq 0.05$, and M includes at least one of Al, Mg, Ti, Cr, Cu, Fe, Co, W, Zn, Ga, Zr, Ru, Ag, Sn, Au, La, Ce, Pr, Nd, Sm, Nb, or Gd.

In some embodiments of this application, the positive electrode active material further includes at least one of a lithium transition metal composite oxide or a lithium transition metal phosphate compound.

In some embodiments of this application, the lithium transition metal composite oxide includes $Li_{x1}Ni_{y1}Co_{z1}Mn_kZ_qO_{2\pm a}T_a$, where Z includes at least one of B, Mg, Al, Si, P, S, Ti, Cr, Fe, Cu, Zn, Ga, Y, Zr, Mo, Ag, W, In, Sn, Pb, Sb, or Ce, and T is halogen, where $0.2 < x1 \leq 1.2$, $0 \leq y1 \leq 1$, $0 \leq z1 \leq 1$, $0 \leq k \leq 1$, $0 \leq q \leq 1$, y1, z1 and k are not 0 at the same time, and $0 \leq a \leq 1$.

In some embodiments of this application, the lithium transition metal phosphate compound includes $Li_{x2}R_{y2}N_{z2}PO_4$, where R includes at least one of Fe or Mn, and N includes at least one of Al, Ti, V, Cr, Co, Li, Ni, Cu, Zn, Mg, Ga, Zr, Nb, or Si, where $0.6 \leq x2 \leq 1.2$, $0.95 \leq y2 \leq 1$, and $0 \leq z2 \leq 0.05$.

In some embodiments of this application, a mass percentage W1 of Mn in the positive electrode active material ranges from 42% to 47% based on mass of the positive electrode active material. For example, the mass percentage of Mn is 42%, 42.3%, 46.9%, or 47%, or any value between any two of the foregoing values based on the mass of the positive electrode active material. Without wishing to be bound by any theory, controlling the mass percentage W1 of Mn in the positive electrode active material within the foregoing range to obtain a proper percentage of lithium manganese oxide in the positive electrode active material can reduce impact brought by poor high-temperature storage performance of lithium manganese oxide material, ensuring alleviation of dissolution of Mn by other active materials, and inhibiting dissolution of Mn and Mn deposition on negative electrodes, thereby improving the high-temperature cycling performance of the electrochemical apparatuses and further improving low-temperature discharge performance of the electrochemical apparatuses.

In some embodiments of this application, a mass percentage W2 of Mn in the negative electrode active material is less than or equal to 0.1% based on mass of the negative electrode active material. For example, based on the mass of the negative electrode active material, the mass percentage of Mn is 0.0050%, 0.0100%, 0.0150%, 0.0201%, 0.0230%, 0.0265%, 0.0280%, 0.0294%, 0.0300%, 0.0320%, 0.0340%, 0.0350%, 0.0450%, 0.0550%, 0.0650%, 0.0750%, 0.0850%, 0.0950%, or 0.1%, or any value between any two of the foregoing values. Without wishing to be bound by any theory, the mass percentage W2 of Mn in the negative electrode active material being less than or equal to 0.1% can reduce a risk of compromising stability of SEI films on the negative electrodes, thereby further improving the high-temperature storage performance of the electrochemical apparatuses.

In some embodiments of this application, the negative electrode plate includes a first zone, a second zone, and a third zone located between the first zone and the second zone, a mass percentage of Mn in the first zone is V1 based on mass of the negative electrode active material in the first zone, a mass percentage of Mn in the second zone is V2 based on mass of the negative electrode active material in the second zone, a mass percentage of Mn in the third zone is V3 based on mass of the negative electrode active material in the third zone, a difference between a maximum and a minimum among V1, V2, and V3 is $\Delta V$, and an average value of V1, V2, and V3 is V, satisfying: $\Delta V/V \leq 20\%$. For example, a value of $\Delta V/V$ may be 0%, 1.45%, 3%, 4%, 5%, 7.8%, 9.2%, 10.4%, 10.5%, 10.8%, 11%, 11.5%, 11.8%, 11.9%, 12.1%, 12.3%, 12.4%, 12.5%, 13%, 17%, 19%, or 20%, or any value between any two of the foregoing values. Without wishing to be bound by any theory, controlling the value of $\Delta V/V$ within the foregoing range can reduce differences in distribution of Mn on negative electrode plates. With uniform distribution of Mn, kinetic performance and stability differences on a surface of negative electrodes can be smaller, and risks of side reactions and lithium precipitation of negative electrodes can be reduced, thereby improving high-temperature service life, safety and reliability of electrochemical apparatuses. The first zone includes a zone starting from a first lateral edge of the negative electrode plate in a width direction to a location 10mm away from the first lateral edge, where tabs are provided on the first lateral edge; and the second zone includes a zone starting from a second lateral edge of the negative electrode plate in the width direction to a location 10mm away from the second lateral edge, where the second lateral edge is opposite to the first lateral edge.

The mass percentage V1 of Mn in the first zone, the mass percentage V2 of Mn in the second zone, and the mass percentage V3 of Mn in the third zone are not particularly limited in this application, provided that the objectives of this application can be achieved. For example, the mass percentage V1 of Mn in the first zone is 0.1020% to 0.1100%. The mass percentage V2 of Mn in the second zone is 0.0950% to 0.1000%. The mass percentage V3 of Mn in the third zone is 0.1020% to 0.1100%.

In some embodiments of this application, the lithium manganese oxide includes a doping element M, and the doping element M includes at least one of Nb, Al, Mg, Ti, Cr, Mo, Zr, Y, or B; and a molar percentage of the doping element M to Mn in the lithium manganese oxide is 0.01% to 2%. For example, the molar percentage of the doping element M to Mn in the lithium manganese oxide is 0.014%, 0.42%, 0.70%, 1.39%, or 1.74%, or any value between any two of the foregoing values. Without wishing to be bound by any theory, when the molar percentage of the doping element M to Mn in the lithium manganese oxide is excessively large (for example, greater than 2%), the high-temperature cycling performance and high-temperature storage performance of electrochemical apparatuses may no longer be significantly improved, and there is a risk that capacity of the electrochemical apparatuses decreases; when the molar percentage of the doping element M to Mn in the lithium manganese oxide is excessively small (for example, less than 0.01%), the high-temperature cycling performance and high-temperature storage performance of the electrochemical apparatuses may not be significantly improved. The molar percentage of the doping element M to Mn in the lithium manganese oxide is controlled within the foregoing range, increasing a density of lithium manganese oxide particles, reducing a percentage of $Mn^{3+}/Mn^{4+}$ in the lithium manganese oxide, and improving structural stability of the lithium manganese oxide, which can effectively reduce the amount of Mn deposited on negative electrodes and improve the high-temperature storage performance and high-temperature cycling performance of electrochemical apparatuses.

In some embodiments of this application, particle size distribution of the positive electrode active material satisfies $1.2 \leq (D_v90-D_v10)/D_v50 \leq 2.2$. For example, a value of $(D_v90-D_v10)/D_v50$ is 1.2, 1.32, 1.48, or 2.2, or any value between any two of the foregoing values. Without wishing to be bound by any theory, particles of the positive electrode active material have a wider particle size distribution range when the value of $(D_v90-D_v10)/D_v50$ is controlled within the foregoing range, which is more conducive to appropriate combination of large-size particles and small-size particles. Under a same compacted density, particles of the positive electrode material are subjected to lower pressure and less crushing, better helping to reduce dissolution of Mn at positive electrodes, reduce the amount of Mn deposited on negative electrodes, and improve distribution uniformity of Mn on negative electrode plates, thereby further improving the high-temperature storage performance and high-temperature cycling performance of electrochemical apparatuses.

$D_v10$, $D_v50$, and $D_v90$ of the positive electrode active material are not particularly limited in this application, provided that the objectives of this application can be achieved. For example, $D_v10$ of the positive electrode active material ranges from 0.9μm to 6μm. $D_v50$ of the positive electrode active material ranges from 9μm to 18μm. $D_v90$ of the positive electrode active material ranges from 19μm to 35μm.

In this application, $D_v10$ is a particle size where the cumulative distribution by volume reaches 10% as counted from the small particle size side. $D_v50$ is a particle size where the cumulative distribution by volume reaches 50% as counted from the small particle size side. $D_v90$ is a particle size where the cumulative distribution by volume reaches 90% as counted from the small particle size side.

In some embodiments of this application, when the electrochemical apparatus is at a 0% SOC, a potential of the negative electrode plate with respect to Li is less than 0.6V As the potential of the negative electrode plate with respect to Li gradually increases during discharge of the electrochemical apparatus and reaches a maximum when the electrochemical apparatus is at the 0% SOC. An SEI film is unstable under high potential, and therefore is easy to decompose and generate gas, increasing a risk of reducing stability of negative electrode surfaces. Therefore, the potential of the negative electrode plate with respect to Li is less than 0.6V when the electrochemical apparatus is at the 0% SOC, reducing side reactions of a negative electrode interface of the electrochemical apparatus under a high temperature, improving the high-temperature cycling performance of the electrochemical apparatus and increasing service life thereof.

In some embodiments of this application, a compacted density of the positive electrode active material layer ranges from 2.8g/cm³ to 3.05g/cm³. For example, the compacted density of the positive electrode active material layer is 2.8g/cm³, 2.95g/cm³, or 3.05g/cm³, or any value between any two of the foregoing values. Without wishing to be bound by any theory, controlling the compacted density of the positive electrode active material layer within the foregoing range reduces a crushing risk of particles of a positive electrode active material, inhibiting dissolution of Mn and improving interface stability of the positive electrode active material layer. In addition, better contact between the particles of the positive electrode active material helps to improve conductivity of a conductive network and better control dissolution of Mn and interface stability of the positive electrode active material layer, thereby better helping to improve the high-temperature storage performance and high-temperature cycling performance of the electrochemical apparatus.

In some embodiments of this application, a compacted density of the negative electrode active material layer ranges from 1.45g/cm³ to 1.65g/cm³. For example, the compacted density of the negative electrode active material layer is 1.45g/cm³, 1.55g/cm³, or 1.65g/cm³, or any value between any two of the foregoing values. Without wishing to be bound by any theory, controlling the compacted density of the negative electrode active material layer within the foregoing range reduces a crushing risk of particles of a negative electrode active material and is more conductive to controlling the amount and distribution uniformity of Mn dissolved from positive electrodes and deposited on negative electrodes, thereby helping to improve the high-temperature storage performance and high-temperature cycling performance of the electrochemical apparatus.

In some embodiments of this application, a porosity α of the positive electrode active material layer ranges from 15% to 40%. For example, the porosity α is 15%, 20%, 25%, 30%, 35%, or 40%, or any value between any two of the foregoing values. Without wishing to be bound by any theory, controlling the porosity α within the foregoing range can inhibit a contact failure between particles of the positive electrode active material during charge and discharge of the electrochemical apparatus, where the contact failure results in reduction of the cycling performance and energy density of the electrochemical apparatus. In addition, this can also ensure that the positive electrode active material is fully infiltrated by electrolyte, reducing a migration distance of lithium ions and improving kinetic performance of the electrochemical apparatus.

In this application, the porosity α of the positive electrode active material layer refers to a percentage of a volume of pores between components in the positive electrode active material layer in an apparent volume of the positive electrode active material layer.

In some embodiments of this application, when the electrochemical apparatus is at a 100% SOC, a start position of an exothermic peak on a DSC (differential scanning calorimetry) curve of the positive electrode plate is between 260°C and 280°C, indicating that the electrochemical apparatus has good thermal stability, and hence good high-temperature storage performance, high-temperature cycling performance, and safety performance.

In some embodiments of this application, the electrochemical apparatus further includes an electrolyte, and the electrolyte includes a sulfur-oxygen double bond-containing compound; and a mass percentage of the sulfur-oxygen double bond-containing compound ranges from 0.01% to 1.00% based on mass of the electrolyte. For example, the mass percentage of the sulfur-oxygen double bond-containing compound is 0.01%, 0.50%, or 1.00%, or any value between any two of the foregoing values. Without wishing to be bound by any theory, controlling the mass percentage of the sulfur-oxygen double bond-containing compound within the foregoing range is more conductive to further improving the high-temperature storage performance and high-temperature cycling performance of the electrochemical apparatus, thereby further balancing overall performance of the electrochemical apparatus.

The sulfur-oxygen double bond-containing compound is not limited to a particular type in this application, provided that the objectives of this application can be achieved. For example, the sulfur-oxygen double bond-containing compound may include at least one of 1, 3-propane sultone or ethylene sulfate.

The electrolyte of this application further includes a lithium salt and a non-aqueous solvent. The lithium salt is not limited to a particular type in this application, provided that the objectives of this application can be achieved. For example, the lithium salt may include at least one of lithium hexafluorophosphate ($LiPF_6$), $LiCH_3SO_3$, $LiCF_3SO_3$, $LiN(SO_2CF_3)_2$, $LiC(SO_2CF_3)_3$, or $LiSiF_6$. Preferably, $LiPF_6$ may be included, because $LiPF_6$ can offer a high ionic conductivity and improve high-temperature cycling performance of lithium-ion batteries. The non-aqueous solvent is not particularly limited in this application, provided that the objectives of this application can be achieved. For example, the non-aqueous solvent may include at least one of a carbonate compound, a carboxylate compound, an ether compound, or another organic solvent. The carbonate compound may be at least one of a linear carbonate compound or a cyclic carbonate compound. The linear carbonate compound may include at least one of dimethyl carbonate (DMC), diethyl carbonate (DEC), dipropyl carbonate (DPC), methyl propyl carbonate (MPC), ethyl propyl carbonate (EPC), or methyl ethyl carbonate (MEC). The cyclic carbonate compound may include at least one of ethylene carbonate (EC), propylene carbonate (PC), or butylene carbonate (BC). The carboxylate compound may include at least one of ethyl acetate, n-propyl acetate, tert-butyl acetate, methyl propionate, ethyl propionate, or propyl propionate. The ether compound may include at least one of dibutyl ether, tetraethylene glycol dimethyl ether, diglyme, 1,2-dimethoxyethane, 1,2-diethoxyethane, ethoxymethoxy ethane, 2-methyltetrahydrofuran, or tetrahydrofuran. The another organic solvent may include at least one of dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, or phosphate ester.

The negative electrode active material is not limited to a particular type in this application, provided that the objectives of this application can be achieved. For example, the negative electrode active material may include at least one of natural graphite, artificial graphite, mesocarbon microbead (MCMB), hard carbon, soft carbon, silicon, silicon-carbon composite, $SiO_x$ (0<x<2), Li-Sn alloy, Li-Sn-O alloy, Sn, SnO, $SnO_2$, spinel-structure lithium titanate $Li_4Ti_5O_{12}$, Li-Al alloy, or lithium metal.

The negative electrode plate of this application further includes a negative electrode current collector. The negative electrode current collector is not particularly limited in this application, provided that the objectives of this application can be achieved. For example, the negative electrode current collector may include copper foil, copper alloy foil, nickel foil, stainless steel foil, titanium foil, foamed nickel, foamed copper, a composite current collector, or the like. Thicknesses of the negative electrode current collector and the negative electrode material layer are not particularly limited in this application, provided that the objectives of this application can be achieved. For example, the thickness of the negative electrode current collector is 6$\mu$m to 10$\mu$m, and the thickness of the one-sided negative electrode active material layer is 30$\mu$m to 130$\mu$m. In this application, the negative electrode active material layer may be disposed on one surface of the negative electrode current collector in a thickness direction, or may be disposed on two surfaces of the negative electrode current collector in the thickness direction. It should be noted that the "surface" herein may be an entire zone or a partial zone of the negative electrode current collector. This is not particularly limited in this application, provided that the objectives of this application can be achieved. Optionally, the negative electrode plate may further include a conductive layer, and the conductive layer is located between the negative electrode current collector and the negative electrode material layer. Composition of the conductive layer is not particularly limited in this application, and the conductive layer may be a conductive layer commonly used in the art. For example, the conductive layer includes a conductive agent and a binder.

The positive electrode plate of this application further includes a positive electrode current collector. The positive electrode current collector is not particularly limited in this application, provided that the objectives of this application can be achieved. For example, the positive electrode current collector may include aluminum foil, aluminum alloy foil, a composite current collector, or the like. Thicknesses of the positive electrode current collector and the positive electrode material layer in this application are not particularly limited, provided that the objectives of this application can be achieved. For example, the thickness of the positive electrode current collector is 5$\mu$m to 20$\mu$m, and preferably 6$\mu$m to 18$\mu$m. The thickness of the one-sided positive electrode active material layer is 30$\mu$m to 120$\mu$m. In this application, the positive electrode active material layer may be disposed on one surface of the positive electrode active material in a thickness direction, or may be disposed on two surfaces of the positive electrode current collector in the thickness direction. It should be noted that the "surface" herein may be an entire zone or a partial zone of the positive electrode current collector. This is not particularly limited in this application, provided that the objectives of this application can be achieved. Optionally, the positive electrode plate may further include a conductive layer. The conductive layer is located between the positive electrode current collector and the positive electrode active material layer. Composition of the conductive layer is not particularly limited in this application, and the conductive layer may be a conductive layer commonly used in the art. For example, the conductive layer includes a conductive agent and a binder.

The conductive agent and the binder are not particularly limited in this application, provided that the objectives of this application can be achieved. For example, the conductive agent may include at least one of conductive carbon black (Super P), carbon nanotubes (CNTs), carbon nanofibers, flake graphite, acetylene black, carbon black, Ketjen black, carbon dots, or graphene. For example, the binder may include at least one of polyacrylic alcohol, sodium polyacrylate, potassium polyacrylate, lithium polyacrylate, polyimide, polyamideimide, styrene butadiene rubber (SBR), polyvinyl alcohol (PVA), polyvinylidene fluoride, polyvinylidene difluoride (PVDF), polytetrafluoroethylene (PTFE), polyvinyl butyral (PVB), water-based acrylic resin, carboxymethyl cellulose (CMC), or sodium carboxymethyl cellulose (CMC-Na).

The electrochemical apparatus of this application further includes a separator, and the separator is configured to separate the positive electrode plate and the negative electrode plate, so as to prevent internal short circuit of lithium-ion batteries and allow free passage of electrolyte ions to complete electrochemical charge and discharge. The separator is not particularly limited in this application, provided that the objectives of this application can be achieved. For example, the separator may be at least one of a polyethylene (PE) and polypropylene (PP)-based polyolefin (PO) separator, a polyester film (for example, a polyethylene terephthalate (PET) film), a cellulose film, a polyimide film (PI), a polyamide film (PA), a spandex film, an aramid film, a woven film, a non-woven film (non-woven fabric), a microporous film, a composite film, a separator paper, a laminated film, or a spinning film. For example, the separator may include a substrate layer and a surface treatment layer. The substrate layer may be a non-woven fabric, film, or composite film having a porous structure. The substrate layer may be made of at least one of polyethylene, polypropylene, polyethylene terephthalate, or polyimide. Optionally, a polypropylene porous film, a polyethylene porous film, polypropylene non-woven fabric, polyethylene non-woven fabric, or polypropylene-polyethylene-polypropylene porous composite film can be used. Optionally, a surface treatment layer is provided on at least one surface of the substrate layer, and the surface treatment layer may be a polymer layer or an inorganic substance layer, or a layer formed by a hybrid polymer and an inorganic substance. For example, the inorganic layer includes inorganic particles and the binder. The inorganic particles are not particularly limited, and may be selected from, for example, at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited and may be selected from, for example, at least one of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

The electrochemical apparatus is not particularly limited in this application and may include any apparatus in which an electrochemical reaction occurs. In some embodiments, the electrochemical apparatus may include but is not limited to a lithium metal secondary battery, a lithium-ion secondary battery, a lithium polymer secondary battery, or a lithium-ion polymer secondary battery.

A process for preparing the electrochemical apparatus is well known to a person skilled in the art and is not particularly limited in this application. For example, the process may include but is not limited to the following steps: stacking the positive electrode plate, the separator, and the negative electrode plate in sequence, performing operations such as winding and folding on the stack as required to obtain an electrode assembly having a winding structure, placing the electrode assembly into a packaging case, injecting an electrolyte into the packaging case, and sealing the packaging case to obtain the electrochemical apparatus; or laminating the positive electrode plate, the separator, and the negative electrode plate in sequence, fixing four corners of the overall laminated structure with a tape to obtain an electrode assembly having a laminated structure, placing the electrode assembly into a packaging case, injecting an electrolyte into the packaging case, and sealing the packaging case to obtain the electrochemical apparatus. In addition, if necessary, an overcurrent prevention element, a guide plate, and the like may be placed in the packaging case to prevent pressure increase, overcharge, and discharge in the electrochemical apparatus.

A second aspect of this application provides an electronic apparatus, including the electrochemical apparatus according to any one of the foregoing embodiments of this application. The electronic apparatus has good high-temperature storage performance and high-temperature cycling performance.

The electronic apparatus is not particularly limited in this application and may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

This application provides an electrochemical apparatus and an electronic apparatus containing the same. The electrochemical apparatus includes a negative electrode plate and a positive electrode plate, where the negative electrode plate includes a negative electrode active material layer, and the negative electrode active material layer includes a negative electrode active material; and the positive electrode plate includes a positive electrode active material layer, the positive electrode active material layer includes a positive electrode active material, and the positive electrode active material includes a lithium manganese oxide; and when the electrochemical apparatus is at a 15% SOC, a lattice parameter $a$ of the lithium manganese oxide is lower than or equal to 8.2008Å. The lattice parameter $a$ of the lithium manganese oxide in the positive negative active material is controlled within a range of lower than or equal to 8.2008Å when the electrochemical apparatus is at the 15% SOC, so that the lithium manganese oxide can still have a relatively stable crystal structure at an appropriate SOC, improving the high-temperature cycling performance of the electrochemical apparatus. In addition, the crystal structure of the lithium manganese oxide is more stable during charge and discharge cycling, dissolution of Mn ions is effectively inhibited, and the high-temperature storage performance of the electrochemical apparatus can also be effectively improved.

**DESCRIPTION OF EMBODIMENTS**

To make the objectives, technical solutions, and advantages of this application clearer and more comprehensible, the following describes this application in detail with reference to embodiments. Apparently, the described embodiments are merely some but not all of the embodiments of this application. All other technical solutions obtained by a person of ordinary skill in the art based on the embodiments of this application fall within the protection scope of this application.

It should be noted that, in the specific embodiments of this application, an example in which a lithium-ion battery is used as an electrochemical apparatus is used to illustrate this application. However, the electrochemical apparatus in this application is not limited to the lithium-ion battery.

**Examples**

The following describes the embodiments of this application more specifically by using examples and comparative examples. Various tests and evaluations were performed in the following methods. In addition, unless otherwise specified, "%" is based on mass.

**Test method and device:**

**Test of lattice parameter $a$ of lithium manganese oxide:**

A lithium-ion battery was left standing for 30min in a 25°C environment, charged to 4.2V at a constant current rate of 0.2C, charged to 0.05C at a constant voltage of 4.2V, left standing for 30min, and discharged to 2.8V at a rate of 0.5C. A discharge capacity at this moment was recorded as an actual capacity of the lithium-ion battery. Then, the lithium-ion battery was charged for 9min at a constant current rate of 0.1C according to the actual capacity and adjusted to be at a 15% SOC. The lithium-ion battery was disassembled to obtain a positive electrode plate, and the positive electrode plate was soaked for 24 hours in a DMC (dimethyl carbonate) solution, and then dried for later use. An XRD (X-ray diffractometer) was used for testing the prepared electrode plate, and refinement was performed to obtain a lattice parameter $a$ of lithium manganese oxide.

**Test of percentages of elements in positive electrode active material:**

A lithium-ion battery was fully discharged to 2.8V and disassembled to obtain a positive electrode plate, and the positive electrode plate was soaked for 24 hours in a DMC solution. After drying, a positive electrode active material layer was scraped off from the positive electrode plate and burnt with flame to remove a binder and a conductive agent so as to obtain positive electrode active material powder for later use. Six parallel samples of the treated positive electrode active material powder were taken, and separately weighed, digested, and diluted. Then, a Thermo ICAP6300 inductively coupled plasma optical emission spectrometer was used for measuring mass percentages of different elements to obtain an average value, where the mass percentages of the elements were the mass percentages of the elements in the positive electrode active material.

**Test of percentage of Mn in negative electrode active material:**

A lithium-ion battery was fully discharged to 2.8V and disassembled to obtain a negative electrode plate; the negative electrode plate was soaked for 24 hours in a DMC solution and dried for later use; three zones were specified for the plate in a width direction of the plate, where a first zone was a zone starting from a tab-side edge to a location 10mm away in an edge-to-center direction of the plate, a second zone was a zone starting from a non-tab-side edge to a location 10mm away in an edge-to-center direction of the plate, and a third zone was the remaining part of the plate. Six parallel samples were taken from each of the first zone, second zone, and third zone of the treated negative electrode plate, and separately weighed, digested, and diluted. Then, a Thermo ICAP6300 inductively coupled plasma optical emission spectrometer was used for measuring mass percentages of element Mn to obtain an average value, where the measured average mass percentages of Mn in the first zone, the second zone, and the third zone were V1, V2, and V3, respectively. A percentage V of Mn in a negative electrode was defined as an average value of V1, V2, and V3, where a difference between a maximum and a minimum among V1, V2, and V3 was $\Delta$V.

**Test of D$_v$10, D$_v$50 and D$_v$90 of positive electrode active material:**

A laser particle size analyzer was used for testing D$_v$10, D$_v$50 and D$_v$90 of a positive electrode active material.

**Test of potential of negative electrode plate with respect to Li:**

When a lithium-ion battery was fully discharged to 2.8V, a multi-channel data recorder was used for testing a potential of a negative electrode plate with respect to Li in a in a fully discharged state.

**Test of compacted density of positive electrode active material layer:**

A compacted density Pc of a positive electrode active material layer was calculated by a formula: Pc=mc/Vc. In the formula, mc was mass of the positive electrode active material layer and measured in g, and Vc was a volume of the positive electrode active material layer and measured in cm$^3$. The volume Vc was a product of an area Sc of the positive electrode active material layer and a thickness of the positive electrode active material layer.

**Test of compacted density of negative electrode active material layer:**

A compacted density Pa of a negative electrode active material layer was calculated by a formula: Pa=ma/Va. In the formula, ma was mass of the negative electrode active material layer and measured in g, and Va was a volume of the negative electrode active material layer and measured in cm$^3$. The volume Va was a product of an area Sa of the negative electrode active material layer and a thickness of the negative electrode active material layer.

**Test of porosity $\alpha$ of positive electrode active material layer:**

A positive electrode plate with a radius of d was obtained through punching, and a micrometer was used to measure a thickness h1 of the positive electrode plate. The positive electrode plate was put into a sample chamber of an AccuPyc 1340 instrument and filled with helium (He) in the airtight sample chamber, so that a true volume V of the positive electrode plate was measured by using the Bohr's law (PV=nRT). After testing, a positive electrode active material layer was cleaned off the surface of the positive electrode plate, a thickness h2 of a current collector was measured by using the micrometer, and an apparent volume of the positive electrode active material layer $\pi$d$^2$×(h1-h2) was calculated. Finally, the porosity of the positive active material layer was obtained by the following formula:

$$\alpha=1-(V-\pi d^2 \times h2)/[\pi d^2 \times (h1-h2)].$$

**DSC test:**

DSC was used for measuring a heat flux difference between a test sample and a reference as a function of temperature. An STA449F3 simultaneous thermal analyzer was used for testing a DSC curve by using the following method: adjusting a lithium-ion battery to be at a 100% SOC, disassembling the lithium-ion battery to take out a positive electrode plate, cleaning the positive electrode plate with DMC, cutting the cleaned positive electrode plate into a sample with specifications of 10cm×10cm, and performing test in a temperature range of 150°C to 400°C at a temperature rise rate of 10°C/min to obtain a DSC curve.

**High-temperature cycling performance test:**

In a 45°C environment, a lithium-ion battery was charged at a constant charge current of 0.5C until an upper-limit voltage was 4.2V and discharged at a constant discharge current of 1C until a final voltage was 2.8V, and a discharge capacity of a first cycle was recorded. Then, 500 charge and discharge cycles were performed by using same steps and a discharge capacity of the lithium-ion battery at the 500th cycle was recorded.

$$\text{Cycling capacity retention rate (\%) of lithium-ion battery=(discharge}$$

$$\text{capacity at 500}^{\text{th}}\text{ cycle/discharge capacity at first cycle)}\times 100\%.$$

Four samples were tested in each example or comparative example, and test results were averaged.

**High-temperature storage performance test:**

A lithium-ion battery was left standing for 30min in a 25°C environment, charged to 4.2V at a constant current rate of 0.2C, charged to 0.05C at a constant voltage of 4.2V, left standing for 30min, and discharged to 2.8V at a rate of 0.5C. A discharge capacity at this moment was recorded as an actual capacity of the lithium-ion battery and a capacity before storage. Then, the battery in a fully charged state was placed in a 60°C oven for 7 days, and then a reversible capacity of the battery was tested by using same steps and used as a capacity after storage.

$$\text{High-temperature storage capacity retention rate of lithium-ion battery}$$

$$\text{(\%)=capacity after storage/capacity before storage}\times 100\%.$$

**Low-temperature performance test:**

A lithium-ion battery was left standing for 30min in a 25°C environment, charged to 4.2V at a constant current rate of 0.2C, charged to 0.05C at a constant voltage of 4.2V, left standing for 30min, and discharged to 2.8V at a rate of 0.5C. A discharge capacity at this moment was recorded as an actual capacity C1 of the lithium-ion battery at 25°C. Then, the lithium-ion battery was left standing for 60min in a -10°C environment, charged to 4.2V at a constant current rate of 0.2C, charged to 0.05C at a constant voltage of 4.2V, left standing for 30min, and discharged to 2.8V at a rate of 0.5C. A discharge capacity at this moment was recorded as an actual capacity C2 of the lithium-ion battery at -10°C. A discharge capacity retention rate at -10°C was calculated by the following formula: discharge capacity retention rate=C2/C1 $\times$100%.

**Example 1-1**

<Preparation of positive electrode active material>

Raw materials lithium carbonate and manganese dioxide were mixed at a molar ratio of Li:Mn being 0.545:1, and a specified amount of niobium pentoxide ($Nb_2O_5$) was added as an additive, so that a molar percentage of Nb to Mn in lithium manganese oxide was 0.42% and the lithium manganese oxide was generated through reaction.
The lithium manganese oxide and layered lithium nickel cobalt manganese oxide $Li(Ni_{0.55}Co_{0.15}Mn_{0.30})O_2$ were mixed at a mass ratio of 80:20 to obtain a positive electrode active material.

<Preparation of positive electrode plate>

The above prepared positive electrode active material, a conductive agent acetylene black, and a binder polyvinylidene fluoride (PVDF) were mixed at a weight ratio of 96.5:2:1.5, with NMP (N-methylpyrrolidone) added as a solvent to prepare a slurry with a solid content of 75%. The mixture was stirred under the action of a vacuum mixer until the system became a uniform positive electrode slurry. The positive electrode slurry was uniformly applied on one surface of a 10$\mu$m thick positive electrode current collector aluminum foil and dried at 90°C to obtain a positive electrode plate with a coating layer thickness of 110$\mu$m, where one surface of the positive electrode plate was coated with a positive electrode active material layer. Then, the foregoing steps were repeated on the other surface of the positive electrode plate to obtain the positive electrode plate coated with the positive electrode active material layer on both surfaces thereof. Processes such as drying at 90°C, cold-pressing at a compacted density of 2.95g/cm$^3$, slitting, and welding of tabs were performed in sequence to obtain the positive electrode plate.

<Preparation of negative electrode plate>

A negative electrode active material artificial graphite, a conductive agent acetylene black, a binder SBR, and a thickener sodium carboxymethyl cellulose were mixed at a mass ratio of 95:2:2:1, with deionized water added to prepare a negative electrode slurry with a solid content of 70%. The mixture was stirred under the action of a vacuum mixer until the system became a uniform negative electrode slurry. The negative electrode slurry was uniformly applied on one surface of a negative electrode current collector copper foil with a thickness of 8μm and dried at 90°C to obtain a negative electrode plate with a coating layer thickness of 130μm, where one surface of the negative electrode plate was coated with a negative electrode active material layer. Then, the foregoing steps were repeated on the other surface of the negative electrode plate to obtain the negative electrode plate coated with the negative electrode active material layer on both surfaces thereof. Processes such as drying at 90°C, cold-pressing at a compacted density of 1.55g/cm$^3$, slitting, and welding of tabs were performed in sequence to obtain the negative electrode plate.

<Preparation of separator>

A 14μm thick polyethylene (PE) porous polymer film was used.

<Preparation of electrolyte>

In a glove box under argon atmosphere with a moisture content less than 10ppm, propylene carbonate (PC), ethylene carbonate (EC), and diethyl carbonate (DEC) were well mixed at a mass ratio of 1:1:1 to obtain an organic solvent. A lithium salt LiPF$_6$ was added and well mixed to obtain a base electrolyte. A mass concentration of LiPF$_6$ was 12.5%.

<Preparation of lithium-ion battery>

The positive electrode plate, the separator, and the negative electrode plate prepared above were stacked in sequence, so that the separator was disposed between the positive electrode plate and the negative electrode plate for separation, and the stack was wound to obtain an electrode assembly. The electrode assembly was placed into an aluminum-plastic film packaging case, and the packaging case was dried in an 85°C vacuum oven for 12h for dehydration and injected with the prepared electrolyte, followed by processes such as packaging, standing, formation, degassing, and shaping to obtain a lithium-ion battery.

**Example 1-2** was the same as Example 1-1 except that a molar ratio of Li:Mn in raw materials lithium carbonate and manganese dioxide was 0.560:1 during preparation of lithium manganese oxide.

**Example 1-3** was the same as Example 1-2 except that lithium manganese oxide, lithium iron phosphate LiFePO$_4$, and layered lithium nickel cobalt manganese oxide Li(Ni$_{0.55}$Co$_{0.15}$Mn$_{0.30}$)O$_2$ were mixed at a mass ratio of 80:15:5 to obtain a positive electrode active material.

**Example 1-4** was the same as Example 1-3 except that lithium manganese oxide, lithium iron phosphate LiFePO$_4$, and layered lithium nickel cobalt manganese oxide Li(Ni$_{0.55}$Co$_{0.15}$Mn$_{0.30}$)O$_2$ were mixed at a mass ratio of 80:10:10 to obtain a positive electrode active material.

**Example 1-5** was the same as Example 1-4 except that a molar ratio of Li:Mn in raw materials lithium carbonate and manganese dioxide was 0.575:1 during preparation of lithium manganese oxide.

**Example 1-6** was the same as Example 1-1 except that a molar ratio of Li:Mn in raw materials lithium carbonate and manganese dioxide was 0.575:1 during preparation of lithium manganese oxide.

**Example 1-7** was the same as Example 1-1 except that a molar ratio of Li:Mn in raw materials lithium carbonate and manganese dioxide was 0.580:1 during preparation of lithium manganese oxide.

**Example 1-8** was the same as Example 1-5 except that a molar ratio of Li:Mn in raw materials lithium carbonate and manganese dioxide was 0.580:1 during preparation of lithium manganese oxide.

**Example 2-1** was the same as Example 1-2 except that there was no additive niobium pentoxide during preparation of lithium manganese oxide.

**Example 2-2** was the same as Example 1-2 except that magnesium oxide (MgO) was used as an additive during preparation of lithium manganese oxide to control a molar percentage of Mg to Mn in the lithium manganese oxide to be 0.42%.

**Example 2-3** was the same as Example 1-2 except that aluminum oxide (Al$_2$O$_3$) was used as an additive during preparation of lithium manganese oxide to control a molar percentage of Al to Mn in the lithium manganese oxide to be 0.42%.

**Example 2-4** was the same as Example 1-2 except that titanium dioxide (TiO$_2$) was used as an additive during preparation of lithium manganese oxide to control a molar percentage of Ti to Mn in the lithium manganese oxide to be 0.42%.

**Example 2-5** was the same as Example 1-2 except that a molar percentage of Nb to Mn in lithium manganese oxide was controlled to be 0.014% during preparation of the lithium manganese oxide.

**Example 2-6** was the same as Example 1-2 except that a molar percentage of Nb to Mn in lithium manganese oxide was controlled to be 0.70% during preparation of the lithium manganese oxide.

**Example 2-7** was the same as Example 1-2 except that a molar percentage of Nb to Mn in lithium manganese oxide was controlled to be 1.39% during preparation of the lithium manganese oxide.

**Example 2-8** was the same as Example 1-2 except that a molar percentage of Nb to Mn in lithium manganese oxide was controlled to be 1.74% during preparation of the lithium manganese oxide.

**Examples 3-1 to 3-5** were the same as Example 1-2 except that $(D_v90-D_v10)/D_v50$ was adjusted according to Table 3.

**Examples 4-1 to 4-3** were the same as Example 1-2 except that a compacted density of a positive electrode plate was adjusted according to Table 3.

**Examples 4-4 and 4-5** were the same as Example 1-2 except that a compacted density of a negative electrode plate was adjusted according to Table 3.

**Examples 5-1 and 5-2** were the same as Example 1-2 except that a potential of a negative electrode plate with respect to Li when the prepared lithium-ion battery was at a 0% SOC was adjusted by establishing a match between first-cycle efficiencies of a positive electrode plate and a negative electrode plate.

**Examples 6-1 to 6-4** were the same as Example 1-2 except that a sulfur-oxygen double bond-containing compound 1, 3-propane sultone was added during <preparation of electrolyte>, and a mass percentage of the sulfur-oxygen double bond-containing compound based on mass of the electrolyte was adjusted according to Table 5.

**Comparative Example 1-1** was the same as Example 1-1 except that a ratio of lithium carbonate to manganese dioxide was 0.540:1 during preparation of lithium manganese oxide.

Performance parameters in Examples 1-1 to 1-8 and Comparative Example 1-1 are shown in Table 1; performance parameters in Examples 2-1 to 2-8 are shown in Table 2; performance parameters in Examples 3-1 to 3-5 and Examples 4-1 to 4-5 are shown in Table 3; performance parameters in Examples 5-1 and 5-2 are shown in Table 4; and performance parameters in Examples 6-1 to 6-4 are shown in Table 5:

**Table 1**

| | Mass percentage W1 of Mn | Lattice parameter $a$ (Å) | Start position of exothermic peak (°C) | $D_v90$ (µm) | $D_v10$ (µm) | $D_v50$ (µm) | $(D_v90-D_v10)/(D_v50)$ | Percentage W2 of Mn in negative electrode | $\Delta V/V$ | Low-temperature performance | High-temperature storage performance | High-temperature cycling performance |
|---|---|---|---|---|---|---|---|---|---|---|---|---|
| Example 1-1 | 46.9% | 8.2008 | 260 | 20.2 | 4.5 | 10.6 | 1.48 | 0.0830% | 17.0% | 86.0% | 88.0% | 65.0% |
| Example 1-2 | 46.9% | 8.1908 | 263 | 20.2 | 4.5 | 10.6 | 1.48 | 0.0300% | 11.8% | 85.0% | 91.0% | 75.0% |
| Example 1-3 | 41.5% | 8.1619 | 275 | 21.3 | 1.1 | 10.1 | 2.00 | 0.0280% | 11.0% | 70.0% | 90.0% | 77.0% |
| Example 1-4 | 42.3% | 8.1289 | 270 | 27.1 | 1.5 | 12.3 | 2.08 | 0.0265% | 10.8% | 80.0% | 89.0% | 78.0% |
| Example 1-5 | 42.3% | 8.1190 | 272 | 27.1 | 1.5 | 12.3 | 2.08 | 0.0201% | 9.2% | 81.0% | 90.0% | 80.0% |
| Example 1-6 | 46.9% | 8.1837 | 265 | 20.2 | 4.5 | 10.6 | 1.48 | 0.0150% | 7.8% | 84.0% | 91.5% | 76.0% |
| Example 1-7 | 46.9% | 8.1819 | 267 | 20.2 | 4.5 | 10.6 | 1.48 | 0.0100% | 5.0% | 85.0% | 93.0% | 79.0% |
| Example 1-8 | 42.3% | 8.1170 | 270 | 27.1 | 1.5 | 12.3 | 2.08 | 0.0120% | 6.0% | 80.0% | 90.0% | 81.0% |
| Comparative Example 1-1 | 46.9% | 8.2030 | 257 | 20.2 | 4.5 | 10.6 | 1.48 | 0.1270% | 18.5% | 86.0% | 86.0% | 50.0% |

12

It can be learned from Examples 1-1 to 1-8 and Comparative Example 1-1 that high-temperature storage performance and high-temperature cycling performance of lithium-ion batteries at a 15% SOC changed with a lattice parameter *a* of lithium manganese oxide. In the Examples 1-1 to 1-8, lattice parameters *a* of lithium manganese oxide were lower than or equal to 8.2008Å, and the lithium-ion batteries at the 15% SOC had better high-temperature storage performance and high-temperature cycling performance, especially the high-temperature cycling performance, which was significantly improved compared with that in the Comparative Example 1-1 where the lattice parameter *a* of lithium manganese oxide was not within the range. Without wishing to be bound by any theory, a possible reason is that when a lattice parameter *a* of lithium manganese oxide is controlled within the foregoing range at a 15% SOC of a lithium-ion battery, the lithium manganese oxide releases an approximate amount of lithium and has a slight change in crystal structure at this SOC, inhibiting fast attenuation of the lithium manganese oxide at low SOC during storage and helping to maintain a stable crystal structure of the lithium manganese oxide during cycling of the lithium ion battery (namely, within the change range of 0% SOC to 100% SOC), thereby improving the high-temperature cycling performance of electrochemical apparatuses. In addition, this can also reduce structural distortion of lithium manganese oxide during charge and discharge cycling of the lithium-ion battery and inhibit dissolution of Mn (manganese) ions, enabling more uniform distribution of Mn on negative electrodes and reducing damages to SEI (solid electrolyte interface) films on the negative electrodes, thereby improving the high-temperature storage performance of lithium-ion batteries.

**Table 2**

| | Lattice parameter $a$ (Å) | Type of doping element M | Molar percentage of M | Percentage W2 of Mn in negative electrode | $\Delta V/V$ | Low-temperature performance | High-temperature storage performance | High-temperature cycling performance |
|---|---|---|---|---|---|---|---|---|
| Example 1-2 | 8.1908 | Nb | 0.42% | 0.0300% | 11.8% | 85.0% | 91.0% | 75.0% |
| Example 2-1 | 8.1921 | / | / | 0.0450% | 11.9% | 86.0% | 89.0% | 68.0% |
| Example 2-2 | 8.1910 | Mg | 0.42% | 0.0300% | 12.0% | 83.0% | 90.0% | 74.0% |
| Example 2-3 | 8.1900 | Al | 0.42% | 0.0294% | 11.5% | 83.0% | 91.5% | 76.0% |
| Example 2-4 | 8.1905 | Ti | 0.42% | 0.0310% | 11.6% | 85.0% | 91.0% | 75.0% |
| Example 2-5 | 8.1918 | Nb | 0.014% | 0.0370% | 12.1% | 85.0% | 89.0% | 70.0% |
| Example 2-6 | 8.1901 | Nb | 0.70% | 0.0270% | 11.0% | 83.0% | 91.5% | 77.0% |
| Example 2-7 | 8.1887 | Nb | 1.39% | 0.0230% | 10.4% | 81.0% | 92.0% | 78.0% |
| Example 2-8 | 8.1881 | Nb | 1.74% | 0.0210% | 10.4% | 75.0% | 92.0% | 79.0% |

Usually, types of doping elements in lithium manganese oxide and molar percentages of doping elements M to Mn also affect high-temperature storage performance and high-temperature cycling performance of an electrochemical apparatus. It can be learned from Example 1-2 and Examples 2-1 to 2-8 that compared with a doping-free design scheme in Example 2-1, doping of elements Nb, Mg, Al, and Ti could increase density of particles of a positive electrode active material, reduce a ratio of $Mn^{3+}/Mn^{4+}$, improve structural stability, reduce an amount of Mn deposited on a negative electrode, and significantly improve high-temperature storage performance and high-temperature cycling performance of batteries. Comparison among Example 1-2 and Examples 2-5 to 2-8 indicates that an increase in a doping amount results in significant improvement of high-temperature performance and slight degradation of low-temperature performance.

**Table 3**

|  | $(D_v90-D_v10)/D_v50$ | Compacted density of positive electrode | Compacted density of negative electrode | Porosity of positive electrode active material layer | Percentage W2 of Mn in negative electrode | $\Delta V/V$ | Low-temperature performance | High-temperature storage performance | High-temperature cycling performance |
|---|---|---|---|---|---|---|---|---|---|
| Example 1-2 | 1.48 | 2.95 | 1.55 | 30% | 0.0300% | 11.8% | 85.0% | 91.0% | 75.0% |
| Example 3-1 | 1.32 | 2.95 | 1.55 | 29% | 0.0320% | 12.3% | 85.0% | 90.0% | 73.0% |
| Example 3-2 | 1.2 | 2.95 | 1.55 | 29% | 0.0350% | 13.0% | 84.0% | 90.0% | 71.0% |
| Example 3-3 | 2.2 | 2.95 | 1.55 | 28% | 0.0340% | 12.4% | 86.0% | 91.0% | 73.0% |
| Example 3-4 | 1.00 | 2.95 | 1.55 | 30% | 0.0410% | 13.5% | 84.0% | 87.0% | 68.0% |
| Example 3-5 | 2.40 | 2.95 | 1.55 | 28% | 0.0460% | 13.9% | 86.5% | 87.0% | 67.0% |
| Example 4-1 | 1.48 | 2.80 | 1.55 | 37% | 0.0230% | 9.0% | 87.0% | 92.0% | 77.0% |
| Example 4-2 | 1.48 | 3.05 | 1.55 | 24% | 0.0350% | 12.5% | 85.0% | 89.0% | 70.0% |
| Example 4-3 | 1.48 | 3.10 | 1.55 | 17% | 0.0440% | 15.0% | 85.0% | 88.0% | 66.0% |
| Example 4-4 | 1.48 | 2.95 | 1.45 | 30% | 0.0300% | 3.0% | 85.0% | 91.0% | 77.0% |
| Example 4-5 | 1.48 | 2.95 | 1.65 | 30% | 0.0300% | 20.0% | 85.0% | 91.5% | 66.0% |

It can be learned from Example 1-2, and Example 3-1 to Example 3-5 that with an increase in $(D_v90-D_v10)/D_v50$ in a specified range, particles had an increasingly wider particle size distribution range, which was more conducive to combination of large-size particles and small-size particles. Under a same compacted density, the particles were subjected to lower pressure and less crushing, helping to reduce dissolution of Mn at positive electrodes, reduce the amount of Mn deposited on negative electrodes, and improve distribution uniformity of Mn on negative electrode plates, thereby delivering high-temperature storage performance and high-temperature cycling performance. However, both excessively wide and excessively narrow distribution of particles bring an adverse impact. For example, in Example 3-4, a relatively low ratio of $(D_v90-D_v10)/D_v50$ resulted in improper combination of large and small particles; and consequently, during cold-pressing of an electrode plate, there were many voids between some particles, or some particles were crushed due to excessive pressure, thereby increasing dissolution of Mn and degrading high-temperature performance. For example, in Example 3-5, a relatively high ratio of $(D_v90-D_v10)/D_v50$ also resulted in improper combination of large and small particles, thereby reducing high-temperature storage performance and high-temperature cycling performance.

It can be learned from Example 1-2 and Examples 4-1 to 4-5 that an increase in a compacted density of a positive electrode plate within a specified range resulted in better contact between material particles, helping to improve conductive networks but increasing crushing of particles, thereby increasing dissolution of Mn and reducing stability of material surfaces, and hence resulting in degradation of high-temperature storage performance and high-temperature cycling performance. In addition, an increase in a compacted density of a negative electrode plate may result in uneven deposition and distribution of Mn on a negative electrode, causing lithium precipitation and other side reactions in some zones, thereby affecting battery interfaces and reducing cycle life.

**Table 4**

| | Potential of negative electrode plate with respect to Li (V) | Low-temperature performance | High-temperature storage performance | High-temperature cycling performance |
|---|---|---|---|---|
| Example 1-2 | 0.56 | 85.0% | 91.0% | 75.0% |
| Example 5-1 | 0.65 | 86.0% | 91.0% | 71.0% |
| Example 5-2 | 0.50 | 85.0% | 91.0% | 78.0% |

Usually, a potential of a negative electrode plate with respect to Li also affects high-temperature storage performance and high-temperature cycling performance of an electrochemical apparatus. It can be learned from Example 1-2 and Examples 5-1 to 5-2 that with a potential of a negative electrode plate with respect to Li being lower than or equal to 0.56V, electrochemical apparatuses in Example 1-2 and Example 5-2 had better high-temperature cycling performance. This is because potentials of negative electrodes gradually rise during discharge and reach a maximum when lithium-ion batteries are in a fully discharged state, namely, at a 0% SOC, and an SEI film is unstable under a high potential and therefore is easy to decompose and generate gas, thereby reducing high-temperature cycling performance.

**Table 5**

| | Mass percentage of sulfur-oxygen double bond-containing compound | Low-temperature performance | High-temperature storage performance | High-temperature cycling performance |
|---|---|---|---|---|
| Example 1-2 | 0.00% | 85.0% | 91.0% | 75.0% |
| Example 6-1 | 0.01% | 84.0% | 91.0% | 77.0% |
| Example 6-2 | 0.50% | 81.0% | 91.5% | 79.0% |
| Example 6-3 | 1.00% | 76.0% | 92.0% | 81.0% |
| Example 6-4 | 1.50% | 66.0% | 92.0% | 82.0% |

It can be learned from Example 1-2 and Example 6-1 to Example 6-4 that when a percentage of a sulfur-oxygen double bond-containing compound 1,3-propane sultone ranged from 0.01% to 1.00% based on mass of an electrolyte, high-temperature storage performance and high-temperature cycling performance of lithium-ion batteries could be further improved to further balance overall performance thereof. An excessively high percentage of 1, 3-propane sultone in the electrolyte (Example 6-4) did not further significantly improve the high-temperature storage performance and the high-temperature cycling performance but reduced the low-temperature performance.

The foregoing descriptions are merely preferred embodiments of this application, but are not intended to limit this application. Any modification, equivalent replacement, or improvement made without departing from the spirit and principle of this application shall fall within the protection scope of this application.

**Claims**

1.  An electrochemical apparatus, comprising a positive electrode plate and a negative electrode plate, wherein the negative electrode plate comprises a negative electrode active material layer, and the negative electrode active material layer comprises a negative electrode active material; the positive electrode plate comprises a positive electrode active material layer, the positive electrode active material layer comprises a positive electrode active material, and the positive electrode active material comprises a lithium manganese oxide; and
    when the electrochemical apparatus is at a 15% SOC, a lattice parameter $a$ of the lithium manganese oxide is lower than or equal to 8.2008Å.

2.  The electrochemical apparatus according to claim 1, wherein the electrochemical apparatus satisfies at least one of the following characteristics:

    (a) a mass percentage W1 of Mn in the positive electrode active material ranges from 42% to 47% based on mass of the positive electrode active material;
    (b) a mass percentage W2 of Mn in the negative electrode active material is less than or equal to 0.1% based on mass of the negative electrode active material; and
    (c) the negative electrode comprises a first zone, a second zone, and a third zone located between the first zone and the second zone, a mass percentage of Mn in the first zone is V1 based on mass of the negative electrode active material in the first zone, a mass percentage of Mn in the second zone is V2 based on mass of the negative electrode active material in the second zone, a mass percentage of Mn in the third zone is V3 based on mass of the negative electrode active material in the third zone, a difference between a maximum and a minimum among V1, V2, and V3 is $\Delta V$, and an average value of V1, V2, and V3 is V, satisfying: $\Delta V/V \leq 20\%$; wherein
    the first zone comprises a zone from a first lateral edge of the negative electrode plate in a width direction to a location 10mm away from the first lateral edge, wherein tabs are provided on the first lateral edge; and
    the second zone comprises a zone from a second lateral edge of the negative electrode plate in the width direction to a location 10mm away from the second lateral edge, wherein the second lateral edge is opposite the first lateral edge.

3.  The electrochemical apparatus according to claim 1, wherein the lithium manganese oxide comprises a doping element M, and the doping element M comprises at least one of Nb, Al, Mg, Ti, Cr, Mo, Zr, Y, or B; and a molar percentage of the doping element M to Mn in the lithium manganese oxide is 0.01% to 2%.

4.  The electrochemical apparatus according to claim 1, wherein particle size distribution of the positive electrode active material satisfies $1.2 \leq (D_v90 - D_v10)/D_v50 \leq 2.2$.

5.  The electrochemical apparatus according to claim 1, wherein when the electrochemical apparatus is at a 0% SOC, potential of the negative electrode plate with respect to Li is less than 0.6V

6.  The electrochemical apparatus according to claim 1, wherein the electrochemical apparatus satisfies at least one of the following characteristics:

    (d) a compacted density of the positive electrode active material layer ranges from 2.8g/cm$^3$ to 3.05g/cm$^3$; and
    (e) a compacted density of the negative electrode active material layer ranges from 1.45g/cm$^3$ to 1.65g/cm$^3$.

7.  The electrochemical apparatus according to claim 1, wherein a porosity $\alpha$ of the positive electrode plate ranges from 15% to 40%.

8. The electrochemical apparatus according to claim 1, wherein when the electrochemical apparatus is at a 100% SOC, a start position of an exothermic peak on a DSC curve of the positive electrode plate is between 260°C and 280°C.

9. The electrochemical apparatus according to claim 1, wherein the electrochemical apparatus further comprises an electrolyte, and the electrolyte comprises a sulfur-oxygen double bond-containing compound.

10. The electrochemical apparatus according to claim 9, wherein a mass percentage of the sulfur-oxygen double bond-containing compound is 0.01% to 1.00% based on mass of the electrolyte.

11. The electrochemical apparatus according to claim 1, wherein the electrochemical apparatus satisfies at least one of the following characteristics:

(f) the lithium manganese oxide comprises $Li_xMn_{2-y}M_yO_4$, wherein $0.9 \leq x \leq 1.1$, $0 \leq y \leq 0.05$, and M comprises at least one of Al, Mg, Ti, Cr, Cu, Fe, Co, W, Zn, Ga, Zr, Ru, Ag, Sn, Au, La, Ce, Pr, Nd, Sm, Nb, or Gd; and
(g) the positive electrode active material further comprises at least one of a lithium transition metal composite oxide or a lithium transition metal phosphate compound.

12. The electrochemical apparatus according to claim 11, wherein the electrochemical apparatus satisfies at least one of the following characteristics:

(h) the lithium transition metal composite oxide comprises $Li_{x1}Ni_{y1}Co_{z1}Mn_kZ_qO_{2 \pm a}T_a$, wherein Z comprises at least one of B, Mg, Al, Si, P, S, Ti, Cr, Fe, Cu, Zn, Ga, Y, Zr, Mo, Ag, W, In, Sn, Pb, Sb, or Ce, and T is halogen; $0.2 < x1 \leq 1.2$, $0 \leq y1 \leq 1$, $0 \leq z1 \leq 1$, $0 \leq k \leq 1$, $0 \leq q \leq 1$, and y1, z1 and k are not 0 at the same time; and $0 \leq a \leq 1$; and
(i) the lithium transition metal phosphate compound comprises $Li_{x2}R_{y2}N_{z2}PO_4$, wherein R comprises at least one of Fe or Mn; N comprises at least one of Al, Ti, V, Cr, Co, Li, Ni, Cu, Zn, Mg, Ga, Zr, Nb, or Si; and $0.6 \leq x2 \leq 1.2$, $0.95 \leq y2 \leq 1$, and $0 \leq z2 \leq 0.05$.

13. An electronic apparatus, comprising the electrochemical apparatus according to any one of claims 1 to 12.

## INTERNATIONAL SEARCH REPORT

| International application No. |
| --- |
| **PCT/CN2021/126833** |

| | |
| --- | --- |
| **A.** | **CLASSIFICATION OF SUBJECT MATTER** |
| | H01M 4/505(2010.01)i; H01M 4/13(2010.01)i; H01M 10/0525(2010.01)i |
| | According to International Patent Classification (IPC) or to both national classification and IPC |

**B.** **FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 正极, 阴极, 锰酸锂, 锂锰氧化物, SOC, 荷电状态, 锂, 锰, 摩尔比, positive electrode, cathode, lithium manganate, lithium manganese oxide, state of charge, lithium, manganese, molar ratio

**C.** **DOCUMENTS CONSIDERED TO BE RELEVANT**

| Category* | Citation of document, with indication, where appropriate, of the relevant passages | Relevant to claim No. |
| --- | --- | --- |
| X | JP 2002231245 A (SHIN KOBE ELECTRIC MACHINERY CO., LTD.) 16 August 2002 (2002-08-16) <br> description, paragraphs 2-41 | 1-3, 5-8, 11-13 |
| Y | JP 2002231245 A (SHIN KOBE ELECTRIC MACHINERY CO., LTD.) 16 August 2002 (2002-08-16) <br> description, paragraphs 2-41 | 4, 9-10 |
| Y | CN 113394455 A (NINGDE AMPEREX TECHNOLOGY LTD.) 14 September 2021 (2021-09-14) <br> description, paragraphs 5-21 | 4, 9-10 |
| X | CN 1262532 A (SANYO ELECTRIC CO., LTD.) 09 August 2000 (2000-08-09) <br> description, p. 1, line 12 to p. 9, line 19, and p. 17, lines 4-22 | 1-3, 5-8, 11-13 |
| Y | CN 1262532 A (SANYO ELECTRIC CO., LTD.) 09 August 2000 (2000-08-09) <br> description, p. 1, line 12 to p. 9, line 19, and p. 17, lines 4-22 | 4, 9-10 |
| X | JP 2000203844 A (TOYOTA CENTRAL R&D LABS., INC.) 25 July 2000 (2000-07-25) <br> description, paragraphs 2 and 19-109 | 1-3, 5-8, 11-13 |
| Y | JP 2000203844 A (TOYOTA CENTRAL R&D LABS., INC.) 25 July 2000 (2000-07-25) <br> description, paragraphs 2 and 19-109 | 4, 9-10 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 June 2022** | **06 July 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/126833**

**C.    DOCUMENTS CONSIDERED TO BE RELEVANT**

| Category* | Citation of document, with indication, where appropriate, of the relevant passages | Relevant to claim No. |
|---|---|---|
| X | JP 2001155727 A (HITACHI METALS, LTD. et al.) 08 June 2001 (2001-06-08) description, paragraphs 2-37 | 1-3, 5-8, 11-13 |
| Y | JP 2001155727 A (HITACHI METALS, LTD. et al.) 08 June 2001 (2001-06-08) description, paragraphs 2-37 | 4, 9-10 |

Form PCT/ISA/210 (second sheet) (January 2015)

INTERNATIONAL SEARCH REPORT
Information on patent family members

International application No.

**PCT/CN2021/126833**

| Patent document cited in search report | | | Publication date (day/month/year) | Patent family member(s) | | | Publication date (day/month/year) |
|---|---|---|---|---|---|---|---|
| JP | 2002231245 | A | 16 August 2002 | None | | | |
| CN | 113394455 | A | 14 September 2021 | None | | | |
| CN | 1262532 | A | 09 August 2000 | EP | 1022792 | A1 | 26 July 2000 |
| | | | | JP | 2000215884 | A | 04 August 2000 |
| | | | | KR | 20000052412 | A | 25 August 2000 |
| | | | | TW | 431012 | B | 21 April 2001 |
| | | | | DE | 60031019 | D1 | 16 November 2006 |
| | | | | US | 6534216 | B1 | 18 March 2003 |
| | | | | JP | 3754218 | B2 | 08 March 2006 |
| | | | | KR | 559104 | B1 | 15 March 2006 |
| | | | | CN | 1248339 | C | 29 March 2006 |
| | | | | EP | 1022792 | B1 | 04 October 2006 |
| | | | | DE | 60031019 | T2 | 03 May 2007 |
| JP | 2000203844 | A | 25 July 2000 | US | 6306542 | B1 | 23 October 2001 |
| JP | 2001155727 | A | 08 June 2001 | JP | 4743804 | B2 | 10 August 2011 |

Form PCT/ISA/210 (patent family annex) (January 2015)